# EUROPEAN PATENT APPLICATION

(11) **EP 4 564 080 A1**
(43) Date of publication of application: **04.06.2025**
(21) Application number: 23212582.3
(22) Date of filing: 28.11.2023
(51) Int. Cl.: G02B 27/01, G02B 5/00, G02B 27/30, G02F 1/1335

(54) **LIGHT PROJECTOR**

(71) Applicant: Snap Inc., Santa Monica, CA 90405 (US)
(72) Inventor: WOODS, David Mark, Abingdon OX14 4SR (GB); PENNELL, Brennon Lloyd, Abingdon OX14 4SR (GB)
(74) Representative: Gill Jennings & Every LLP

(57) **Abstract**

A projector (10) for an augmented reality or mixed reality headset is disclosed, comprising: an emissive display (20) defining an optical axis (9), configured to provide first supplied light (40); an exit pupil (80) configured to couple the first supplied light into a waveguide for an augmented reality or mixed reality headset, the exit pupil comprising a first region (82); an optical arrangement (60) configured to couple the first supplied light from the emissive display towards the exit pupil; and an absorptive structure (70) at the emissive display arranged to absorb visible light reflected towards the emissive display from the exit pupil; wherein the emissive display is configured to provide the first supplied light to the optical arrangement off-centre with respect to the optical axis so that a first partial reflection (50) of the supplied light is coupled towards and absorbed by the absorptive structure.

## Description

### FIELD OF INVENTION

The present invention relates to a light projector, in particular a light projector for augmented reality or virtual reality applications.

### BACKGROUND TO THE INVENTION

In an augmented reality headset, a transparent waveguide is provided in front of an eye or eyes. A light projector transmits light towards the waveguide. Light from the projector can be coupled into the waveguide by an input diffraction grating. Light then propagates within the waveguide by total internal reflection and an output diffraction grating couples light out of the waveguide and towards a viewer. In use, a viewer can see light from their external environment, transmitted through the transparent waveguide, as well as projected light from the projector. This can provide an augmented reality experience.

Some light projectors for augmented or virtual reality applications generate a main image that is intended to be displayed to the user, as well as a second image, or "ghost image", which is not intended to be generated or seen by the user. In some light projectors, the second image can be coupled into the waveguide and shown to the user unintentionally, which can obscure and reduce the clarity of the main image.

An object of the present invention is to address this issue.

### SUMMARY OF INVENTION

According to a first aspect of the invention there is provided a projector for an augmented reality or mixed reality headset, comprising: an emissive display defining an optical axis, configured to provide first supplied light; an exit pupil configured to couple the first supplied light into a waveguide for an augmented reality or mixed reality headset, the exit pupil comprising a first region; an optical arrangement configured to couple the first supplied light from the emissive display towards the exit pupil; and an absorptive structure at the emissive display arranged to absorb visible light reflected towards the emissive display from the exit pupil; wherein the emissive display is configured to provide the first supplied light to the optical arrangement off-centre with respect to the optical axis so that the first supplied light is coupled towards the first region of the exit pupil; wherein the first region is positioned off-centre from the optical axis in a first direction to enable a first partial reflection of the first supplied light at the exit pupil, to be coupled towards and absorbed by the absorptive structure.

In this way, the undesirable first partial reflection, which appears to the user as a second image (often referred to as a ghost image) if coupled into the waveguide, can be separated spatially from the first supplied light. The first partial reflection can then be prevented, at least partially, from being coupled into the waveguide by the absorptive structure. This improves the experience for a user by mitigating ghost effects. Advantageously, the absorptive structure is provided at the emissive display. This may be preferable than providing a structure to absorb the first partial reflection at the exit pupil in some scenarios as it enables a more compact arrangement for the light projector. Additionally, separating the first partial reflection from the first supplied light in this way can be implemented in known light projectors without changing the size or number of pixels of the display. This means the first partial reflection can be prevented from reaching the exit pupil in a way that is generally compatible with existing light projectors.

The emissive display can be of any kind, such as a plasma display panel (PDP), light emitting diode (LED), micro light emitting diode (uLED) display or an organic light emitting diode (OLED) display.

The absorptive structure can be positioned and oriented in any suitable manner that enables the first supplied light to reach the exit pupil while at least partially absorbing the first partial reflection. In one example, the absorptive structure can comprise features angled with respect to the optical axis to intercept the path of the first partial reflection at the emissive display.

Strictly speaking, the term "image" refers to light of a particular focus coupled into a waveguide that would be perceived as an image by the user during use, whereas "supplied light" refers to light supplied by the display, yet to form an image in the waveguide. For the sake of simplicity and conciseness, the term "supplied light", which forms a (desirable) image as viewed by the user during use, may be used interchangeably with the term "image" throughout. For example, it may be pedagogically useful to refer to supplied light as an image before it is coupled into the waveguide and provided to the user as an image. Similarly, for brevity "reflected light", which can appear as an (undesirable) image to the user if allowed to be coupled into the waveguide, may also be referred to throughout as an image. Specifically, the first supplied light and the first partial reflection may be referred to as first and second images, respectively. Second supplied light generated by the emissive display and a corresponding second partial reflection, as described further below, may similarly be referred to as a third and fourth image, respectively.

The emissive display preferably provides one or more light cones in the first supplied light. The one or more light cones can have a chief ray that is not parallel to the optical axis. In this way, the first supplied light can be directed towards the first region of the exit pupil. The first partial reflection of the first supplied light can therefore be directed back towards the absorptive structure where it can be absorbed.

The optical arrangement can comprise one or more optical components, such as lenses, mirrors, beam splitters, wave plates, or other components suitable for coupling light from the emissive display to the exit pupil. The optical arrangement may be configured to operate as, and may be described as, projection optics.

Preferably, the emissive display comprises a first portion configured to provide the first supplied light and a second portion configured to provide second supplied light to the optical arrangement off-centre with respect to the optical axis so that the second supplied light is coupled towards a second region of the exit pupil that is off-centre from the optical axis in a second direction so that the first and second regions are at least partially spatially separated from one another, to enable a second partial reflection of the second supplied light at the exit pupil, to be coupled towards and absorbed by the absorptive structure.

In this way, the emissive display can provide a wider field of view while inhibiting ghost images. The first portion and the second portion of the emissive display may correspond to approximately half of the emissive display on opposing sides of the optical axis. The absorptive structure may be oriented differently at each portion of the emissive display to account for the different angles of arrival of the first and second partial reflections.

The first region and the second region are preferably provided on respective sides of the optical axis (i.e. on opposite sides). The first region and the second region may be different parts of a continuous aperture. Alternatively, the first region and the second region of the exit pupil may be spatially separated to provide an exit pupil comprising two discrete apertures.

The emissive display preferably provides one or more light cones in the second supplied light. The one or more light cones can have a chief ray that is not parallel to the optical axis. In this way, the second supplied light can be directed towards the second region of the exit pupil. A partial reflection of the second supplied light can therefore be directed back towards the absorptive structure where it can be absorbed.

Preferably, the first portion and the second portion of the emissive display are configured to operate simultaneously to provide different parts of a field of view to the exit pupil at the same time. In this way, the full emissive display can be utilised to provide a larger field of view while still absorbing the first partial reflection and the second partial reflection to mitigate ghost effects. This is possible because the absorptive structure is provided at the emissive display and not the exit pupil, which allows both portions of the emissive display to provide light to the exit pupil without becoming absorbed by the absorptive structure.

Preferably, at the first portion of the emissive display, the absorptive structure comprises features oriented towards the first direction and, at the second portion of the emissive display, the absorptive structure comprises features oriented towards the second direction. This arrangement allows the absorptive structure to absorb partial reflections originating from the first and second regions of the exit pupil, which are offset from the optical axis in different directions. In other embodiments, it is envisaged the absorptive structure could be oriented in other ways while nevertheless absorbing the first and second partial reflections.

Preferably, the absorptive structure comprises a plurality of absorptive slats arranged between the emissive display and the optical arrangement. This provides an effective method of preventing the first partial reflection from reaching the exit pupil. Several absorptive slats may be provided for each pixel (or for each row and/or column of pixels) of the emissive display. The absorptive slats may be positioned directly over pixels of the emissive display and could be held in place by a frame, in one example.

Where the emissive display comprises a first portion and a second portion as described above, some or all absorptive slats at the first portion of the emissive display may be oriented towards a first side of the optical axis corresponding to the first direction to couple light from the first portion towards the first region of the exit pupil. Similarly, some or all absorptive slats of the second portion may be oriented towards an opposing second side of the optical axis corresponding to the second direction to couple light from the second portion towards the second region. This allows the absorptive slats to shape light from the emissive display towards the desired region of the exit pupil while also providing the function of absorbing the partial reflections.

Preferably, the absorptive slats are oriented at a plurality of angles relative to the emissive display in a fanned arrangement. In this way, the emissive display can emit light towards the optical arrangement at a larger cone angle to increase the field of view provided to the exit pupil. Several absorptive slats in a fanned arrangement may be provided for each row and/or column of pixels of the emissive display. The absorptive slats may be angled to point towards the centre of a respective row or column of pixels of the emissive display, which minimises the absorption of light travelling along paths leading to the first or second region of the exit pupil. The absorptive slats can be angled in other ways in other embodiments.

The absorptive slats in a given fanned arrangement may be arranged at a minimum angle to the optical axis on one side of the fanned arrangement and arranged at a maximum angle to the optical axis at an opposing side. The skilled person would appreciate the particular angles may be selected based on the numerical aperture of the light projector, which is dependent on the size of the exit pupil and the focal length of the projector.

Preferably, the plurality of absorptive slats comprises a first set of slats and a second set of slats that are arranged substantially perpendicularly to the first set of slats. In this way, the absorptive slats can prevent ghost images arising from light propagating along axes parallel to either dimension of the emissive display. The first set and the second set may be arranged similarly but rotated by 90 degrees with respect to one another in the plane of the emissive display.

Preferably, the first set of slats and the second set of slats intersect to form a plurality of truncated rectangular pyramids. Each truncated rectangular pyramid may correspond to a particular pixel to absorb light emitted by the pixel towards specific regions of an exit pupil that are offset from the optical axis.

Preferably, the plurality of absorptive slats are arranged to enable light from a central pixel of the emissive display to be re-coupled towards the exit pupil. In this way, the clarity of the first image as perceived by the user can be improved. This is achieved because providing an absorptive slat positioned directly over the central pixel, can create a dark line in the image presented to the user. Meanwhile, light from a small number of central pixels that is recoupled into the waveguide is typically not sufficiently bright to generate a perceptible ghost image. The central pixel, or pixels, may be substantially aligned with the optical axis.

Preferably, the emissive display comprises a plurality of pixels, and exposed external surfaces of the emissive display between respective pixels of the plurality of pixels are configured to absorb visible light to provide at least part of the absorptive structure. One source of ghost images can be specular reflection of reflected light (i.e., the first and second partial reflections) at the emissive display between pixels. Configuring exposed parts of the emissive display to absorb visible light in this way prevents such specular reflections to mitigate the presence of ghost images. The exposed external surfaces can be made from or coated with any suitable material that absorbs visible light. The exposed external surfaces may be configured to absorb all the colours of light produced by the emissive display.

In some embodiments, the projector further comprises a collimating tube for each of the plurality of pixels, and an exposed external surface of each of the collimating tubes is configured to absorb visible light to provide at least part of the absorptive structure. In this way, the collimating tubes can couple light from its respective pixel towards the first region or the second region of the exit pupil. The exposed external surfaces can be made of or, alternatively, coated with a material that absorbs visible light emitted by the emissive display to mitigate ghost images.

According to a further aspect of the present invention there is provided an augmented or virtual reality headset comprising the light projector of any of the embodiments described above.

### BREIF DESCRIPTION OF THE DRAWINGS

Embodiments of the invention are now described, by way of example, with reference to the drawings, in which:
Figure 1 is a schematic diagram of a known light projector;
Figure 2 is a schematic diagram of a known light projector;
Figure 3 is a schematic diagram of a known light projector;
Figure 4 is a schematic cross-sectional diagram of a subsection of an embodiment of the invention;
Figure 5 is a schematic diagram of a light projector according to an embodiment of the invention;
Figure 6 is a schematic diagram of a light projector according to an embodiment of the invention;
Figure 7 is a schematic cross-sectional diagram of a subsection of an embodiment of the invention;
Figure 8 is a schematic cross-sectional diagram of a subsection of an embodiment of the invention;
Figure 9 is a schematic cross-sectional diagram of a subsection of an embodiment of the invention;
Figure 10 is a schematic diagram of a light projector according to an embodiment of the invention;
Figure 11 is a schematic diagram of a light projector according to an embodiment of the invention;
Figure 12 is a schematic cross-sectional diagram of a subsection of an embodiment of the invention;
Figure 13 is a schematic cross-sectional diagram of a subsection of an embodiment of the invention; and

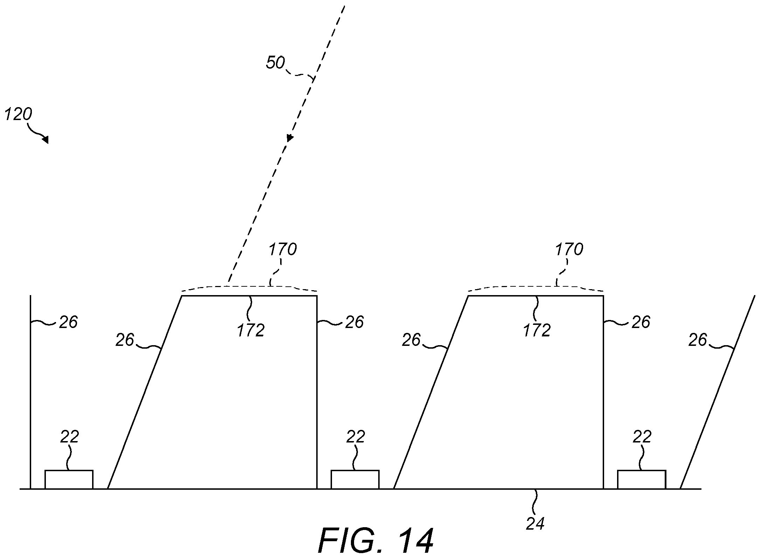

Figure 14 is a schematic cross-sectional diagram of a subsection of an embodiment of the invention.

### DETAILED DESCRIPTION OF THE DRAWINGS

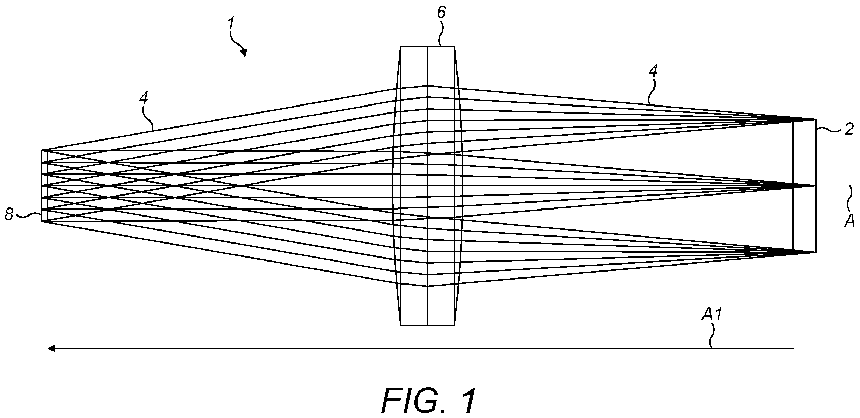

Figure 1 shows a schematic diagram of a subsection of a light projector according to the prior art. A light projector 1 is provided and comprises a display 2 configured to generate or provide light that forms a first image 4. Figure 1 shows a number of exemplary light rays of the supplied light that together form the first image 4.

The display 2 emits the supplied light forming the first image 4 in the direction of propagation shown by the arrow A1 towards an optical arrangement 6 configured to receive light from the display 2 and couple the received light towards an exit pupil 8. The optical arrangement 6 shapes the light forming the first image 4 in positional and angular space to an appropriate or desired size and directs the light towards the exit pupil 8. In particular, the optical arrangement 6 may shape the light in order to form the first image 4 at an infinite distance, making the first image 4 suitable for receipt by a waveguide for augmented reality. The exit pupil 8 contains all information required to output the first image 4 from a waveguide to a user's eye. Specifically, the exit pupil 8 can couple the first image 4 into the waveguide (not shown) suitable for augmented or virtual reality applications. The waveguide typically comprises an input diffractive optical element configured to in-couple light from the exit pupil 8 into the waveguide and an output element configured to out-couple the light representing first image 4 out of the waveguide towards the eye of a user. In an augmented reality or mixed reality headset, the waveguide is typically arranged so that the waveguide is positioned in front of the user's eye and outcouples images towards the eye.

Strictly speaking, the term "image" refers to light of a particular focus coupled into a waveguide that would be perceived as an image by the user in use, whereas "supplied light" refers to light supplied by the display, yet to form an image in the waveguide. For the sake of simplicity and conciseness, the term "supplied light", which forms a (desirable) image as viewed by the user during use, may be used interchangeably with the term "image" throughout. For example, it may be pedagogically useful to refer to supplied light as an image before it is coupled into the waveguide and provided to the user as an image.

The display 2, the optical arrangement 6, and the exit pupil 8 are arranged centred on an optical axis A. The optical axis A is aligned with the geometric centre of the part of the reflective display 2 that generates the first image 4. The optical axis A also runs through the centre of each component of the known light projector 1 that interacts with the light. If the display 2 is a reflective or transmissive display, this can include a light source and any illumination optics that might be necessary to couple light from the light source to the reflective or transmissive display. In this way, the light projector 1 has rotational symmetry about the optical axis A. Thus, the light in the known light projector 1 is generally completely centred on the optical axis A. The rotational symmetry of the optical axis A can be illustrated by two reference rays, equidistant from and parallel to the optical axis A, which would have paths through the known light projector 1 mirrored with respect to the optical axis A.

In the schematic example shown in Figure 1, the components of the known light projector 1 are shown to be arranged linearly and the light from the display 2 follows a generally linear path to the exit pupil 8. However, in practice the optical arrangement 6 could comprise one or more optical components that turn the light by 90 degrees, for example. In this case, the optical axis A would also turn by 90 degrees so that the optical axis A is aligned with the centre of each component that interacts with the light. In the known light projector 1, the display 2 is configured to emit the first image 4 centred on the optical axis A.

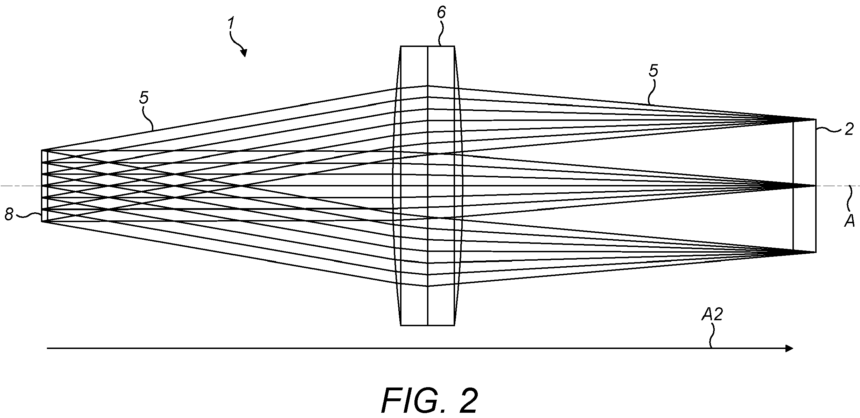

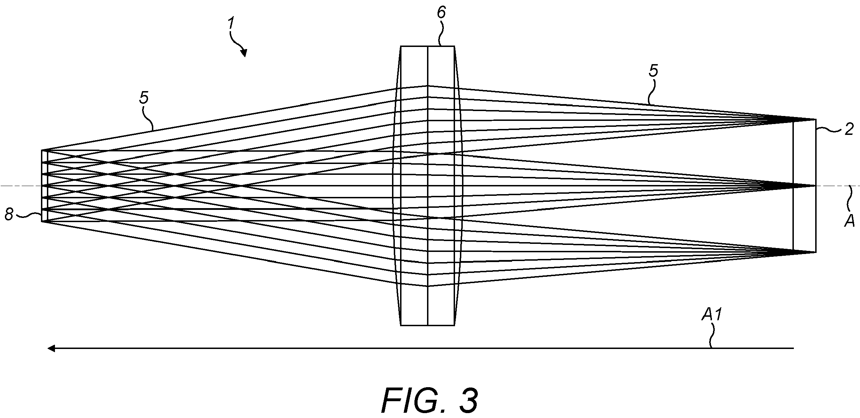

Figures 2 and 3 each show a schematic diagram of a subsection of the known light projector 1 to highlight one problem that has been found with such known light projectors.

As described above, the first image 4 is coupled towards the exit pupil 8 and coupled into the waveguide (not shown). The first image 4 can partially reflect from the input diffractive optical element of the waveguide and this reflection can propagate back through the light projector 1 as a partial reflection of the first image 4. This partial reflection will form a second image 5 in the waveguide.

For brevity "partial reflections" of images formed from supplied light, which can appear as an (undesirable) image to the user if allowed to be coupled into the waveguide, may also be referred to throughout as a "ghost image".

The second image 5 propagates in the direction shown by the arrow A2 in Figure 2. The second image 5 is at least substantially centred on the optical axis A. The reflected light that will form the second image 5 propagates through the optical arrangement 6, which couples the reflected light back towards the display 2. As a result of the reflective properties of the display 2, the second image 5 reflects from the display 2, which propagates once more in the direction of arrow A1 as shown in Figure 3. The second image 5 is coupled from the display 2 to the exit pupil 8 via the optical arrangement 6. Subsequently, the second image 5, which is typically an inverted representation of the first image 4, is coupled into the waveguide as a ghost image, which couples the second image 5 towards a user.

The second image 5 is generally undesirable and can obscure the first image 4, which is the image intended to be shown to the user. The second image 5 is typically perceived by the user as a fainter copy of the first image 4 that is typically inverted relative the first image 4. Thus, the second image 5 is sometimes referred to as a "ghost image". The second image 5 is continuously present in the overall image provided to the user in use, and it is challenging to mitigate or eliminate the presence of the second image 5. One concern of the present invention is to mitigate the presence of this ghost image from the overall image presented to the user.

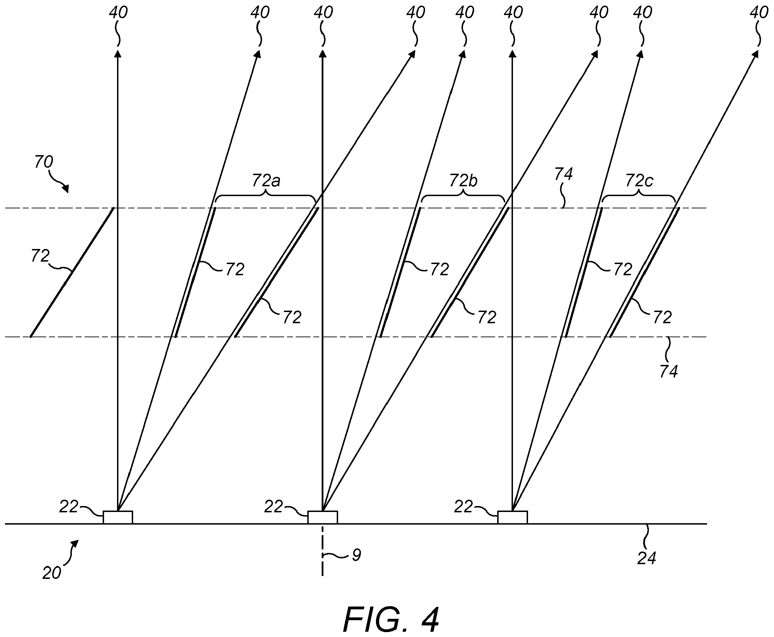

Figure 4 shows a schematic cross-sectional diagram of a portion of a light projector 10 according to an embodiment of the invention.

The light projector 10 comprises an emissive display 20 and an absorptive structure 70 positioned over the emissive display 20. The emissive display comprises an array of pixels 22 mounted on a base 24. Only three pixels are shown in Figure 4 for clarity, however in practice the emissive display 20 may comprise a much larger number of pixels arranged in a regular grid. The absorptive structure 70 comprises a plurality of absorptive slats 72 in a fanned arrangement, held in place by a frame 74 over the pixels 22. Similarly, a much larger number of absorptive slats 72 may be provided in practice than the number shown in Figure 4.

Each pixel 22 can emit light of a single colour to provide a monochrome emissive display 20. Alternatively, each pixel 22 can comprise sub-pixels, each of which emits light in a different colour, to provide a full-colour emissive display 20. Figure 4 shows the path of light emitted by pixels 22 of the emissive display 20 that is not absorbed by the absorptive slats 72. This light forms a first image 40 in the waveguide, as described in more detail below.

Each absorptive slat 72 may be elongated to cover a full linear extent of the emissive display 20 along one dimension of the array of pixels 22. From the perspective of Figure 4, each absorptive slat 72 may be elongated along the axis extending into the page. The absorptive slats 72 are provided at regularly spaced positions along the emissive display 20, generally angled towards the right side of the emissive display from the perspective of Figure 4. The absorptive slats 72 are angled so that the majority of light emitted by the pixels 22 propagating towards a specific region of an exit pupil are unlikely to intersect the absorptive slats. The angle of the slats is such that the slats present the smallest cross-sectional area to such light.

The frame 74 can be any suitable structure for holding the slats over the emissive display 20, such as a rectangular frame attached to the ends of each of the absorptive slats 72 to avoid obstructing light from the emissive display 20.

In this example, the absorptive slats 72 are arranged in groups of two slats associated with a particular row (or column, as explained further below) of pixels. Each group has absorptive slats 72 that are angled to point at the centre of their associated row or column of pixels. Exemplary first, second and third groups 72a, 72b and 72c are shown in Figure 4. As shown, each group is spaced to enable emitted light propagating in a direction approximately parallel to the optical axis 9 to be coupled towards an exit pupil. Emitted light propagating in a direction towards the left of the optical axis 9 (from the perspective of Figure 4) encounters the absorptive slats 72 and becomes absorbed.

The skilled person would appreciate the maximum angle of the absorptive slats 72 with respect to the optical axis 9 can be selected based on the numerical aperture of the projector, which is associated with the size of the exit pupil and the focal length of the projector. The spacing between slat groups, or between slats within a group, may also vary to accommodate the requirements of the projector and any optical arrangement therein.

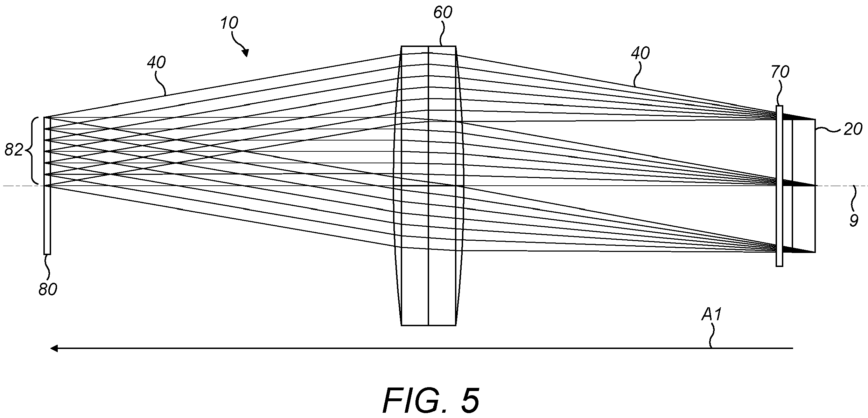

The absorptive slats 72 are made from or coated with an absorptive material configured to absorb visible light emitted from the pixels 22 emitted in a leftwards direction from the perspective of Figure 4. This allows the absorptive structure 70 to couple light emitted from the emissive display 20 towards a specific region of an exit pupil that is offset from the optical axis 9, as shown in Figure 5.

Figure 5 shows a cross sectional schematic diagram of the light projector 10 according to an embodiment of the invention in operation.

Exemplary light rays emitted by the emissive display 20 during use are shown propagating in the direction A1. The exemplary light rays form a first image 40 that is intended to be shown to a user once coupled into the waveguide; however, for brevity, these light rays will also be referred to as the first image 40. The first image 40 is provided in a plurality of cones of light, each cone having a chief ray that is not parallel to the optical axis 9. This is achieved by the absorptive structure 70, which absorbs light emanating from the emissive display 20 towards one side of the optical axis 9. Specifically, the absorptive structure absorbs light propagating towards the left side of the optical axis 9 from the perspective of Figure 4.

The first image 40 is emitted towards an optical arrangement 60 configured to receive light from the emissive display 20 and couple the received light towards an exit pupil 80. The optical arrangement 60 shapes the light so that the first image 40 is formed at an infinite distance, which is a focal length suitable for receipt of the first image 40 by an augmented reality waveguide. The exit pupil 80 receives the first image 40 and allows the first image 40 to be coupled into a waveguide (not shown) suitable for augmented or virtual reality applications. The waveguide typically comprises an input diffractive optical element configured to in-couple light from the exit pupil 80 into the waveguide and an output diffractive element configured to out-couple light from the waveguide towards a user's eye. The waveguide can also be configured to expand the first image 40 using an intermediate grating or the output grating. By "expansion of the image", it is meant that the exit pupil, which contains the entire first image 40, is replicated across the region of the output diffractive element, also sometimes referred to as the "eyebox", through which a user's eye looks when moving through a range of angles. The larger the eyebox, the greater the likelihood a user will perceive first image 40 at any viewing angle.

The emissive display 20, the optical arrangement 60, and the exit pupil 80 are arranged centred on an optical axis 9. The emissive display 20 and the exit pupil 80 are arranged perpendicularly to the optical axis 9. Components of the optical arrangement 60 may also be arranged normal to the optical axis 9. The optical axis 9 is aligned with the geometric centre of the part of the emissive display 20 that generates the first image 40 and is perpendicular to the surface of the emissive display 20. Thus, the emissive display 20 defines the optical axis 9. The optical axis 9 runs through the centre of each of the components of the light projector 10 shown in Figure 5. In this way, the optical axis 9 defines a line of rotational symmetry so that, absent the absorptive structure 70, two rays emitted from the emissive display 20 parallel to and equally distant from the optical axis 9 would follow similar but inverted paths through the components of the light projector 10 shown in Figure 5. These reference rays would end up at the exit pupil 80.

In the schematic example shown in Figure 5, for the purposes of illustration the components of the light projector 10 are arranged side by side, and the light from the emissive display 20 appears to follow a generally straight path to the exit pupil 80. However, in practice the optical arrangement 60 may typically comprise one or more optical components that turn the light, for example by 90 degrees. In this case, the optical axis 9 would also turn by 90 degrees so that the optical axis 9 is aligned with the centre of each component that interacts with the light. Some components of the light projector, such as a beam splitter in a birdbath configuration, may create temporary branching paths of light before recombining the light into a single beam. Such components may be centred on the optical axis 9, and the optical axis 9 may turn in the manner described above only if the component is configured to produce a resultant change in direction in the light.

The optical arrangement 60 shown in Figure 5 comprises a single focusing lens for the purposes of illustration. In practice, the optical arrangement 60 could comprise any number of a variety of optical components, such as lenses, mirrors, beam splitters, wave plates, or other components suitable for coupling light from the display 20 to the exit pupil 80. The optical arrangement 60 could comprise components in a barrel or birdbath configuration, or some other configuration.

The exit pupil 80 is configured as an aperture in a housing of the light projector 10. Alternatively, the exit pupil 80 could comprise two or more separate apertures, or a single aperture that is not elongate. In other embodiments, the exit pupil 80 could comprise an optical component, such as transparent glass, configured to couple the first image 40 into the waveguide.

The waveguide is positioned with respect to the exit pupil 80 so that the first image 40 is incident on an input grating of the waveguide. In other embodiments, intervening optical components could couple the first image 40 from the exit pupil 80 to the input grating. The input grating is configured to couple the first image 40 into the waveguide, which propagates through the waveguide by total internal reflection towards an output grating. The output grating then couples the first image 40 towards a user's eye. In augmented reality applications, the waveguide is usually transparent so that the external environment can be viewed through the waveguide. The first image 40 can be provided to the eye so that the first image 40 is viewed as an overlay on the surrounding environment.

Unlike the display 2 of the known light projector 1, the light from the emissive display 20 is shaped by the absorptive slats 72 of the absorptive structure 70 to transmit the first image 40 off-centre with respect to the optical axis 9, as shown in Figure 4. In particular, the first image 40 is coupled towards the optical arrangement 60 centred along a path that is at a non-zero angle to the optical axis 9 at a reduced cone angle. This enables the optical arrangement 60 to couple the first image 40 towards a first region 82 of the exit pupil 80 that is also offset with respect to the optical axis 9 in the same direction as the orientation of the angled absorptive slats 72. In this example, the first region 82 is shifted from the optical axis 9 so that the optical axis 9 is tangential to a peripheral edge of the first region 82.

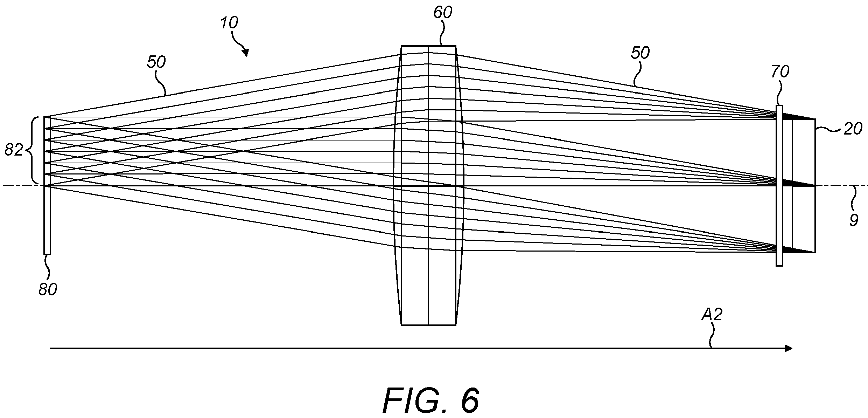

Upon reaching the waveguide, the first image 40 is mainly transmitted into an input grating of the waveguide, whereafter it is coupled towards a user. However, a partial reflection also occurs at the input grating that is transmitted back towards the emissive display 20 through the exit pupil 80. This partial reflection, also referred to as a second image 50 as shown in Figures 6 to 8, can form an undesirable ghost image if allowed to reach the waveguide. Figures 6, 7 and 8 illustrate how the absorptive structure 70 mitigates the coupling of the second image 50 into the waveguide.

Figure 6 shows the path of the second image 50 through the light projector 50. As indicated by the arrow A2, the second image 50 returns towards the emissive display 20, following the same path as the first image 40 shown in Figure 5 but in the opposite direction. For the purposes of clarity and illustration, the first image 40 is shown only in Figure 5, however, in practice, the first image 40 and the second image 50 would be present in the light projector 10 simultaneously.

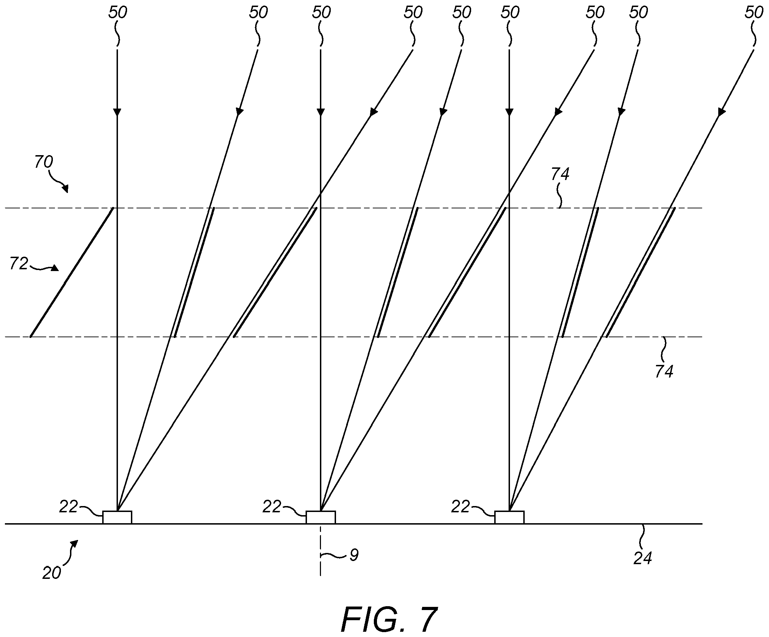

The second image 50 is reflected from the first region 82 and the light forming the second image 50 retraces its path back to the emissive display 20. Figure 7 shows exemplary light rays of the second image 50 reaching the emissive display 20.

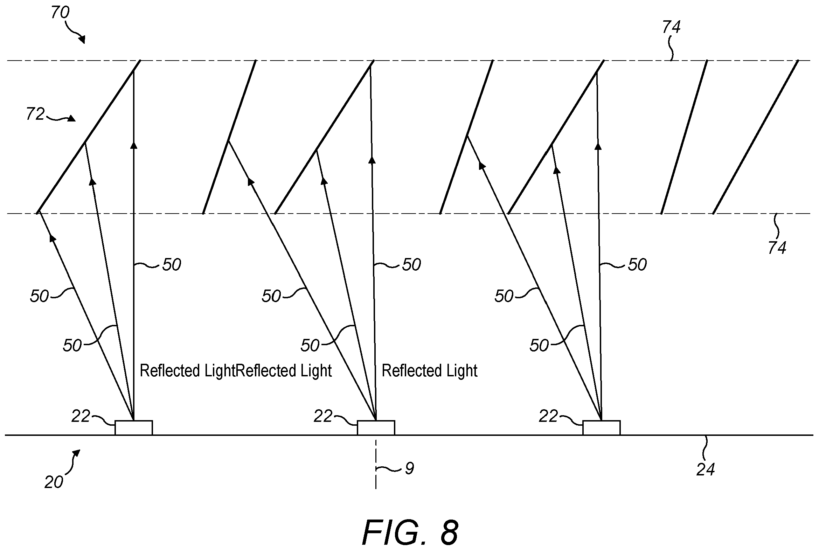

The second image 50 then reflects from the emissive display 20 at an angle of reflection equal to and opposite the angle of incidence. As illustrated in Figure 8, this causes the light rays of the second image 50 to encounter the absorptive slats 72, which are positioned and oriented to absorb light rays travelling in the direction of the reflected second image 50. This mitigates the presence of the ghost image in the overall image presented to the user.

In the embodiment of Figures 4-8, for the purposes of illustration the absorptive slats 72 are only provided at spaced positions along one dimension of the emissive display 20, viewed as left to right from the perspective of Figures 4, 7 and 8. In practice, a further set of absorptive slats may be provided in the frame 74 that are arranged perpendicularly to the absorptive slats 72 shown in Figure 4. From the perspective of Figures 4, 7 and 8, if the emissive display 20 extends into the page, then these further absorptive slats would be provided at spaced positions into the page and intersect the absorptive slats 72. In this case, these two substantially perpendicular sets of intersecting absorptive slats of the absorptive structure 70 form a plurality of truncated rectangular pyramids with open ends. These further absorptive slats prevent a ghost image from appearing due to light propagating along a direction parallel to the (top-bottom) axis of the emissive display 20 going into the page. At the same time, the absorptive slats 72 prevent a ghost image arising from light propagating along the left-right axis of the emissive display 20.

The further set of absorptive slats can be provided with a similar spacing and angle relative to the optical axis as the absorptive slats 72. That is, the further absorptive slats can be in a fanned arrangement and arranged in groups associated with a particular column of pixels 20.

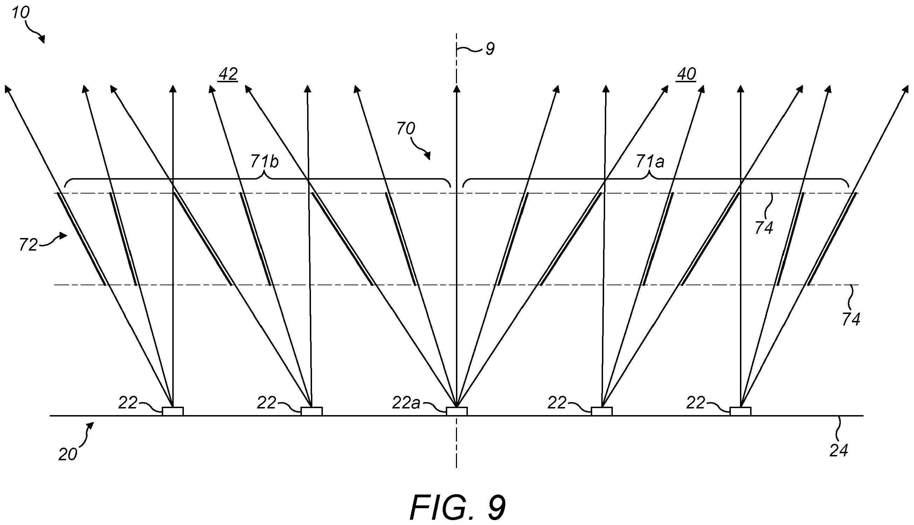

Figure 9 shows an alternative embodiment where the absorptive slats 72 are oriented in opposite directions on different sides of the optical axis 9. From the perspective of Figure 8, the absorptive slats 72 at a first portion 71a of the emissive display 20 are oriented towards the right side of the emissive display 20. From the same perspective, the absorptive slats 72 at a second portion 71b of the emissive display 20 are oriented leftwards. In this example, the absorptive slats 72 are arranged in groups of two pointing towards the centre of a specific row or column of pixels 22, as described previously.

In front of a central pixel 22a at the optical axis 9 an absorptive slat 72 may not be present. This avoids the creation of a black line in the image presented to the user, which could otherwise arise from an absorptive slat positioned directly over the central pixel 22a that absorbs a thin portion of light emitted by the central pixel 22a. Although this would allow light from the central pixel 22a to be re-coupled towards the exit pupil 80 and the waveguide, the single pixel 22a is typically not bright enough to generate a user-perceptible ghost image.

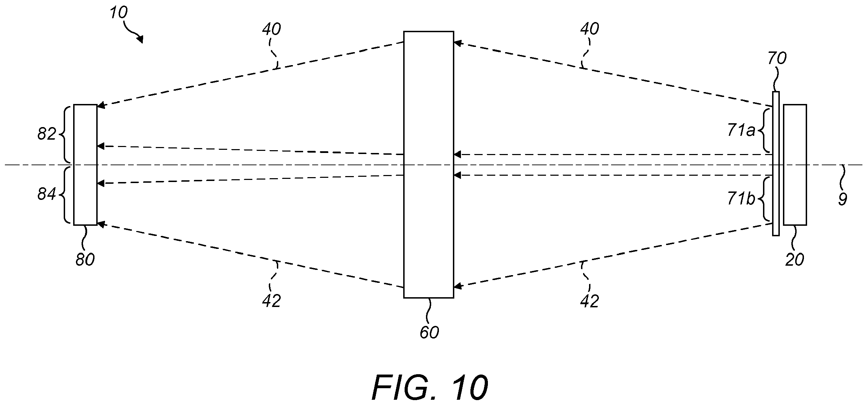

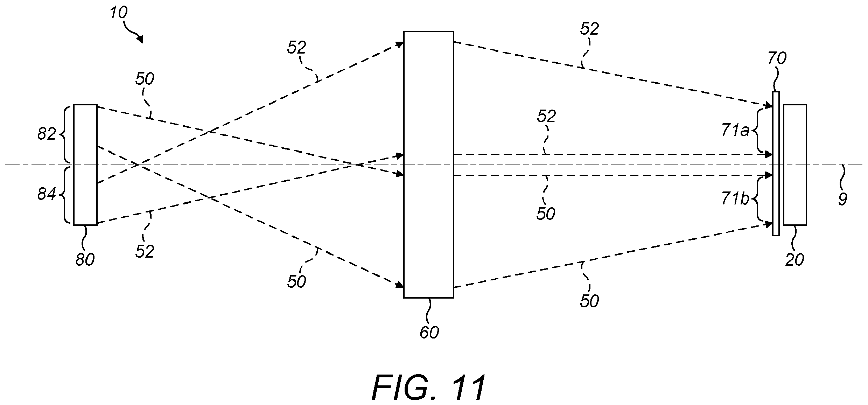

Figures 10 and 11 illustrate how light from each side of the optical axis 9 propagates through the light projector 10.

Figure 10 shows a schematic cross-sectional diagram of the light projector 10 in operation using the absorptive structure 70 of Figure 9.

The absorptive structure 70 shapes light from the first portion 71a of the emissive display 20 to couple the first image 40 towards the first region 82 of the exit pupil in a similar manner as described with respect to Figures 4 to 7. The first portion 71a of the emissive display 20 may only illuminate half of the optical arrangement 60 "above" the optical axis 9 from the view of Figure 9, or to the right side of the optical axis 9 from the perspective of Figure 8.

At the same time, the absorptive structure 70 also shapes light from the second portion 71b to transmit a third image 42 off-centre with respect to the optical axis 9. The third image 42 is intended to be coupled into the waveguide to form a different part of the field of view in the overall image provided to a user. The third image 42 is coupled towards the optical arrangement 60 centred along a path that is at a non-zero angle to the optical axis 9 at a reduced cone angle, as described previously. This enables the optical arrangement 60 to couple the third image 42 towards a second region 84 of the exit pupil 80 that is also offset with respect to the optical axis 9 in the same direction as the orientation of the angled absorptive slats 72 at the second portion 71b. The second portion 71b of the emissive display 20 may only illuminate half of the optical arrangement 60 "below" the optical axis 9 from the perspective of Figure 9 or to the "left" of the optical axis 9 from the perspective of Figure 8.

In this example, the second region 84 is shifted from the optical axis 9 so that the optical axis 9 is tangential to a peripheral edge of the second region 84. The first region 82 and the second region 84 are spatially separated and offset from the optical axis 9 in equal and opposite directions. The third image 42 enters a waveguide through the second region 84 of the exit pupil.

The second portion 71b and the first portion 71a are configured to operate simultaneously to provide different parts of a field of view of an overall image to a user at the same time. In this manner, the absorptive structure 70 of Figure 8 may enable augmented reality images with a wider field of view to be provided compared to the absorptive structure 70 of Figure 4. Additionally, having different sides of an emissive display 20 coupled into different regions of the exit pupil 80 can enable more flexibility in the light projector 10. Although the first region 82 and the second region 82 are shown as adjacent in the present and above examples, the first and second region 82, 84 can be separated to a greater extent in other examples.

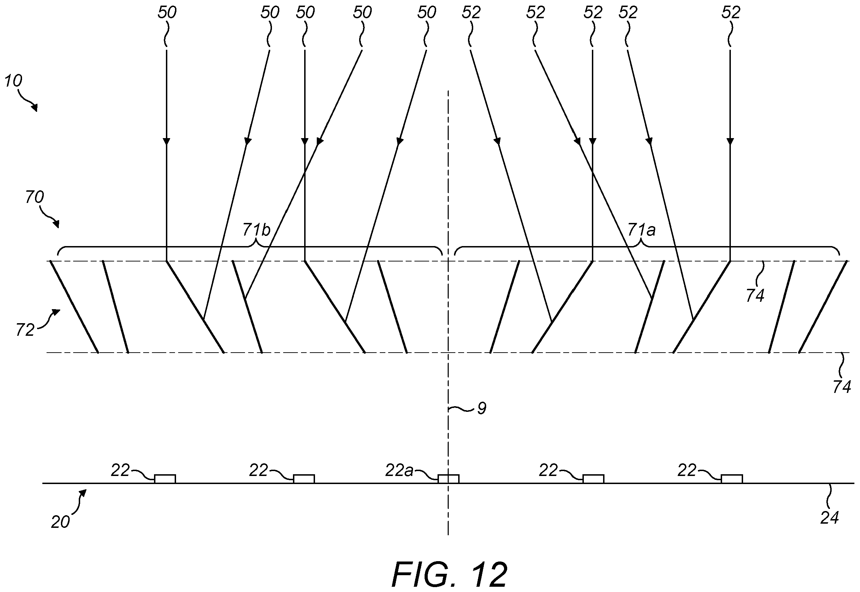

Figures 11 and 12 illustrate how the absorptive slats 72 inhibit partial reflections of the first image 40 and the third image 42 from returning to the waveguide.

Figure 11 shows the path of the second image 50 and a fourth image 52, formed by a partial reflection of the first image 40 and third image 42 respectively at the waveguide, through the light projector 10. As the first image 40 and the third image 42 originate from a single side of the optical axis 9, the second image 50 and the fourth image 52 consequently reflect about the optical axis 9 at the exit pupil 80. As shown, the second image 50 is then coupled towards the second region 71b of the emissive display 20 while the fourth image 52 is coupled towards the first region 71a. Each of the second and fourth images 50, 52 are coupled towards the emissive display 20 from the optical arrangement 60 off-centre with respect to the optical axis 9.

As shown in Figure 12, this causes the second and fourth images 50, 52 to be coupled towards the back faces of the absorptive slats 72 at the second portion 71b and the first portion 71a of the emissive display 20, respectively, where they are absorbed.

As described previously, the absorptive structure 70 can comprise further absorptive slats arranged substantially perpendicularly to the absorptive slats 72 shown in Figures 9 and 12.

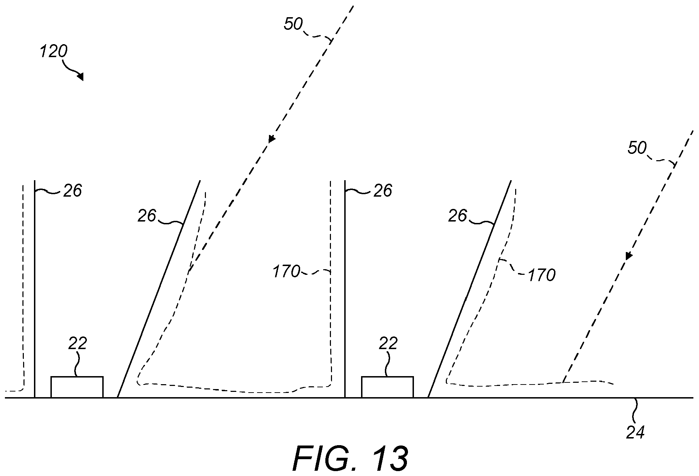

Figure 13 shows a schematic cross-sectional diagram of part of an alternative emissive display 120 that can be used in the light projector 10 according to an embodiment of the invention.

The emissive display 120 comprises an array of pixels 22 mounted on a base 24 to provide monochrome orfull-colour images, as described previously. In addition, each pixel 22 comprises a collimating tube 26, i.e. a tube with a reflective inner surface, to shape the light emitted by the respective pixel 22. In particular, each collimating tube 26 is asymmetric so that emitted light is coupled preferentially towards one side of the optical axis 9. The collimating tubes 26 are flared on their right sides only (as depicted), from the perspective of Figure 12. The non-flared side of the collimating tubes 26 prevents emitted light from propagating towards the non-flared left side, reducing the cone angle of emitted light in that direction. In this way, emitted light from the emissive display 120 can be provided with a reduced cone angle so that images can be provided off-centre from the optical axis 9. As described previously, this enables images to be coupled towards one of two opposing regions of an exit pupil.

In general, partial reflections arising from (desirable) images entering a waveguide may reach the emissive display 120 in the same manner as described previously. These partial reflections can re-reflect or scatter from the surfaces of the LEDs or the base 24. To mitigate this, the external faces (away from the emitters) of the collimating tubes 26 is coated with an absorptive coating 170 configured to absorb visible light to inhibit ghost images. This prevents the second image 50 from reflecting from the base 24 or the LEDs 22 to reduce the intensity of any ghost images in the overall images provided to the user.

Alternatively, as shown in Figure 13, a platform 172 can be positioned between the collimating tubes 26 that is coated with the absorptive coating 170 to prevent light from reflecting or scattering from the base 24 of the emissive display 120.

In other examples, the emissive display 120 may have collimating tubes 26 flared towards different directions on opposing sides of the optical axis 9, so that each side of the emissive display 120 couples light to one of two opposing regions of an exit pupil. For instance, pixels 22 to the right of the optical axis 9 may have collimating tubes 26 flared towards the right side of the optical axis 9 and vice versa. This allows each side of the emissive display 120 to couple emitted light towards a specific region of the exit pupil that is offset from the optical axis.

Instead of the absorptive coating 170, the external face or faces of the collimating tubes 26, or the exposed outer surface of the platform 172, may be made from a material configured to absorb visible light to inhibit partial reflections.

The emissive display 120 can replace the emissive display 20 in the light projector 10 described above. The light projector 10 equipped with the reflective display 20 or the reflective display 120 can be provided in any suitable augmented or virtual reality headset equipped with a waveguide to provide clearer images to a user.

## Claims

1. A projector for an augmented reality or mixed reality headset, comprising:
an emissive display defining an optical axis, configured to provide first supplied light;
an exit pupil configured to couple the first supplied light into a waveguide for an augmented reality or mixed reality headset, the exit pupil comprising a first region;
an optical arrangement configured to couple the first supplied light from the emissive display towards the exit pupil; and
an absorptive structure at the emissive display arranged to absorb visible light reflected towards the emissive display from the exit pupil;
wherein the emissive display is configured to provide the first supplied light to the optical arrangement off-centre with respect to the optical axis so that the first supplied light is coupled towards the first region of the exit pupil;
wherein the first region is positioned off-centre from the optical axis in a first direction to enable a first partial reflection of the first supplied light at the exit pupil to be coupled towards and absorbed by the absorptive structure.

2. The projector of claim 1, wherein the emissive display comprises a first portion configured to provide the first supplied light and a second portion configured to provide second supplied light to the optical arrangement off-centre with respect to the optical axis so that the second supplied light is coupled towards a second region of the exit pupil that is off-centre from the optical axis in a second direction so that the first and second regions are at least partially spatially separated from one another, to enable a second partial reflection of the second supplied light at the exit pupil to be coupled towards and absorbed by the absorptive structure.

3. The projector of claim 2, wherein the first portion and the second portion of the emissive display are configured to operate simultaneously to provide different parts of a field of view to the exit pupil at the same time.

4. The projector of claim 2 or claim 3, wherein, at the first portion of the emissive display, the absorptive structure comprises features oriented towards the first direction and, at the second portion of the emissive display, the absorptive structure comprises features oriented towards the second direction.

5. The projector of any of the preceding claims, wherein the absorptive structure comprises a plurality of absorptive slats arranged between the emissive display and the optical arrangement.

6. The projector of claim 5, wherein the absorptive slats are oriented at a plurality of angles relative to the emissive display in a fanned arrangement.

7. The projector of claim 5 or claim 6, wherein the plurality of absorptive slats comprises a first set of slats and a second set of slats that are arranged substantially perpendicularly to the first set of slats.

8. The projector of claim 7, wherein the first set of slats and the second set of slats intersect to form a plurality of truncated rectangular pyramids.

9. The projector of any of claims 5 to 8, wherein the plurality of absorptive slats is arranged to enable light from a central pixel of the emissive display to be re-coupled towards the exit pupil.

10. The projector of any of claims 1 to 4, wherein the emissive display comprises a plurality of pixels, and wherein exposed external surfaces of the emissive display between respective pixels of the plurality of pixels are configured to absorb visible light to provide at least part of the absorptive structure.

11. The projector of claim 10, further comprising a collimating tube for each of the plurality of pixels, wherein an exposed external surface of each of the collimating tubes is configured to absorb visible light to provide at least part of the absorptive structure.

12. An augmented or virtual reality headset comprising the light projector of any of the preceding claims.
